Europäisches Patentamt

European Patent Office

Office européen des brevets

(11) Numéro de publication : **0 028 551**
**B1**

(12) **FASCICULE DE BREVET EUROPÉEN**

(45) Date de publication du fascicule du brevet :
05.10.83

(51) Int. Cl.³ : **H 04 L 25/66**

(21) Numéro de dépôt : **80401427.2**

(22) Date de dépôt : **07.10.80**

(54) **Comparateur à mémoire, assurant la régénération de signaux électriques numériques, et système de transmission numérique utilisant un tel comparateur.**

(30) Priorité : **05.11.79 FR 7927217**

(43) Date de publication de la demande :
**13.05.81 Bulletin 81/19**

(45) Mention de la délivrance du brevet :
**05.10.83 Bulletin 83/40**

(84) Etats contractants désignés :
**DE GB IT NL SE**

(56) Documents cités :
ELECTRONICS LETTERS, vol. 14, no. 9, 27 avril 1978 Londres GB J. DEKKERS : « GaAs Mesfet technology and characteristics for optical communication systems », pages 272-274

8th EUROPEAN MICROWAVE CONFERENCE 78, Conference Proceedings, 4-8 septembre 1978, Paris, édité par Microwave Exhibitions and Publishers Ltd. Sevenoaks, Kent GB M. CATHE-LIN et al. : « Microwave frequency digital circuits using GaAs Mesfet's with a planar self-aligned technology », pages 55-60

(73) Titulaire : **THOMSON-CSF**
**173, Boulevard Haussmann**
**F-75379 Paris Cedex 08 (FR)**

(72) Inventeur : **Peltier, Michel**
**"THOMSON-CSF" - SCPI 173, bld Haussmann**
**F-75360 Paris Cedex 08 (FR)**
Inventeur : **Gloanec, Maurice**
**"THOMSON-CSF" - SCPI 173, bld Haussmann**
**F-75360 Paris Cedex 08 (FR)**
Inventeur : **Nuzillat, Gérard**
**"THOMSON-CSF" - SCPI 173, bld Haussmann**
**F-75360 Paris Cedex 08 (FR)**
Inventeur : **Maurel, Vincent**
**"THOMSON-CSF" - SCPI 173, bld Haussmann**
**F-75360 Paris Cedex 08 (FR)**
Inventeur : **Charrier, Michel**
**"THOMSON-CSF" - SCPI 173, bld Haussmann**
**F-75360 Paris Cedex 08 (FR)**

(74) Mandataire : **Taboureau, James et al**
**THOMSON-CSF SCPI 173, Bld Haussmann**
**F-75379 Paris Cedex 08 (FR)**

Jouve, 18, rue St-Denis, 75001 Paris, France

## Comparateur à mémoire, assurant la régénération de signaux électriques numériques, et système de transmission numérique utilisant un tel comparateur

La présente invention concerne un comparateur mémorisateur fonctionnant au moyen de transistors à effet de champ réalisé en circuit intégré principalement sur arséniure de gallium et destiné aux systèmes de transmission numérique.

La numérisation de l'information, et son traitement en temps réel, est une technique qui prend une place croissante dans les systèmes électroniques actuels. De ce fait, les composants sont amenés à manipuler des débits d'information numérique de plus en plus élevés et l'évolution de nombreux systèmes apparaît actuellement conditionnée par la disponibilité de composants capables d'effectuer les opérations logiques élémentaires en des temps nettement inférieurs à la nanoseconde. Les circuits intégrés sur arséniure de gallium possèdent des caractéristiques qui leur permettent de répondre à ce problème. La technologie des circuits intégrés à transistor à effet de champ sur arséniure de gallium à tension de seuil négative (MESFET) permet de réaliser le comparateur mémorisateur objet de l'invention avec un débit de 900 Mégabits/seconde.

Le développement des communications entraîne le développement des systèmes de transmission numérique dont les débits d'information sont de plus en plus élevés. Lorsque l'information doit être acheminée sur une distance importante, il y a nécessité de régénérer l'information qui s'est nécessairement dégradée dans le canal de transmission. C'est pourquoi est disposé, à intervalle régulier, dans le canal un organe — le répéteur — dont le rôle est précisément de régénérer le signal électrique ou optique porteur de l'information. Ce répéteur possède généralement un circuit qui traite des signaux électriques et que l'on appelle comparateur à mémoire ou plus rapidement régénérateur et dont les 3 fonctions sont :

— discrimination de la nature du symbole présent à l'entrée du générateur à un instant précis défini par l'horloge du système ;

— resynchronisation de la séquence numérique par rapport à l'horloge ;

— remise en forme des impulsions électriques.

Dans la pratique, ce circuit régénérateur fonctionne comme une bascule de type D munie d'un seuil de tension ajustable pour discriminer la nature du symbole.

Le comparateur mémorisateur objet de l'invention est destiné à un système de transmission numérique à haut débit (900 Mégabits/seconde) sur câble coaxial. Dans un tel système, le comparateur mémorisateur constitue l'organe de décision du répéteur régénérateur qui a pour rôle de restaurer le signal dégradé au cours de la transmission. Le comparateur mémorisateur objet de l'invention traite des signaux électriques.

Le comparateur mémorisateur est un composant binaire dont la fonction essentielle est de décider à un instant dit d'échantillonnage, imposé par une horloge externe, du signal électrique reçu. Dans le système considéré, l'information numérique à 900 Mégabits/seconde est transmise sous forme d'un signal à très large bande, une dizaine d'octaves, codé à trois niveaux notés symboliquement : + 1, 0, − 1. le répéteur régénérateur comporte deux comparateurs mémorisateurs à seuils décalés travaillant en parallèle, l'un des comparateurs mémorisateurs comparant le niveau du signal reçu par rapport au niveau + 1, l'autre comparateur par rapport au niveau − 1.

En ce qui concerne les comparateurs mémorisateurs connus fonctionnant sur câble coaxial et à des débits supérieurs à 90 Mégabauds, il faut discerner la prise en compte du signal d'horloge selon que le circuit déclenche sur un flanc de signal ou que le circuit fonctionne avec une impulsion très étroite devant la durée de l'impulsion élémentaire transmise. Cette dernière technique a été retenue pour différents systèmes existants mais elle présente l'inconvénient de nécessiter la réalisation d'une impulsion d'horloge très étroite de durée inférieure à 100 picosecondes pour un débit supérieur à 600 Mégabauds, ce qui n'est pas facilement réalisable surtout lorsque l'alimentation en courant est réduite. Elle requiert de plus l'utilisation de diodes telles que les diodes tunnel ou diodes « Step recovery » dont la consommation est assez élevée et qui n'ont pas une excellente réputation de fiabilité.

Le déclenchement sur un front d'horloge impose de son côté une plus grande complexité au régénérateur. La discrimination de la nature du symbole est effectuée soit en utilisant la non-linéarité de la diode, soit un circuit différentiel dans des structures dérivées des schémas de base de la logique dite ECL, soit enfin un trigger de Schmitt. Les composants actifs utilisés dans ces circuits sont des transistors bipolaires et des diodes sur silicium ou germanium pour le système le plus ancien. Le débit le plus élevé connu à ce jour est de l'ordre de 560 Mégabauds.

Dans un système de transmission sur ligne coaxiale, c'est le régénérateur et non pas les autres organes du répéteur, tels que filtres ou amplificateurs, qui limite à cette valeur le débit en ligne.

Les circuits connus réalisés en technologie bipolaire sur silicium sont donc actuellement limités aux environs de 600 Mégabauds de débit en ligne. Pour fonctionner à des débits plus élevés, les circuits réalisés sur arséniure de gallium sont parfaitement adaptés puisque leur vitesse de fonctionnement est jusqu'à six fois supérieure à la vitesse de fonctionnement des circuits réalisés sur silicium. Cette valeur étant la valeur théorique qui correspond au rapport des mobilités des électrons dans le silicium et dans l'arséniure de gallium.

Le comparateur mémorisateur selon l'invention réalisé selon la technologie dite MESFET à tension de seuil négative nécessite deux tensions d'alimentation + et − 5 volts par rapport à la masse nominalement. Il comporte trois sous-ensembles :

— un comparateur de tension à seuil ajustable dont la bande spectrale prise en compte pour le signal va de 500 KHz à 500 MHz. Le comparateur présente dans cette bande un gain plat de l'ordre de 26 décibels pour la version la plus élaborée ;

— une bascule à déclenchement sur front de type D, commandée par une horloge dont la fréquence maximale est dans le système de 650 MHz. Le temps d'acquisition de l'information, c'est-à-dire la somme des temps de préposition-nement et de maintien, mesuré sur cette bande est de l'ordre de 300 picosecondes ;

— une interface de sortie à basse impédance qui commute 15 milliampères environ, permettant un réglage d'amplitude ainsi que la sommation des signaux de sorties de plusieurs comparateurs mémorisateurs.

De façon plus précise, l'invention concerne un comparateur mémorisateur, assurant la régénération de signaux électriques numériques transmis sur lignes coaxiales, caractérisé en ce qu'il comporte :

— en premier lieu, un circuit comparateur de tension à seuil ajustable, à transistors à effet de champ, lequel compare le signal d'entrée (E) appliqué sur une première borne d'entrée à un signal de polarisation ($V_p$) d'ajustement de seuil appliqué sur une seconde borne d'entrée ;

— en second lieu, une bascule à déclenchement sur fronts, de type « D », à transistors à effet de champ, laquelle reçoit sur une première borne d'entrée le signal électrique issu de la borne de sortie du comparateur à seuil et le resynchronise par rapport à un signal d'horloge appliqué sur une seconde borne d'entrée ;

— en troisième lieu, un étage de sortie composé par un transistor à effet de champ à double grille, lequel reçoit sur sa première grille le signal issu de la borne de sortie de la bascule, sur sa seconde grille une tension de commande et délivre sur sa borne de sortie un courant adapté en amplitude et sous basse impédance.

L'invention sera mieux comprise par la description qui va en être faite, laquelle s'appuie sur les figures de réalisation qui représentent :

figure 1, un schéma synoptique du comparateur mémorisateur selon l'invention ;

figure 2, un schéma électrique du comparateur de tension à seuil ;

figure 3, un schéma électrique de l'interface de sortie ;

figure 4, le schéma électrique du comparateur mémorisateur complet selon l'invention ;

figure 5, le schéma de réalisation selon une première variante du comparateur de tension à seuil ;

figure 6, le schéma de réalisation selon une seconde variante du comparateur de tension à seuil.

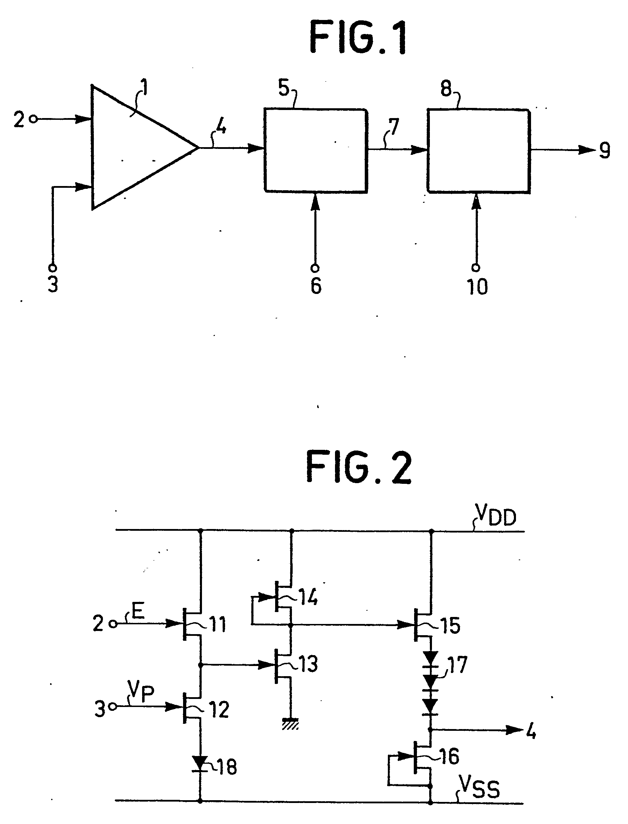

La figure 1 représente le schéma synoptique du comparateur mémorisateur selon l'invention. Il comporte un comparateur à seuil proprement dit 1 dont une borne d'entrée 2 reçoit le signal à traiter et une borne d'entrée 3 reçoit un signal de référence. La borne de sortie 4 du comparateur est reliée à la bascule D 5 qui reçoit sur une borne 6 un signal d'horloge. La borne de sortie 7 de la bascule D est adressée à une interface de sortie à basse impédance 8 qui délivre sur sa borne de sortie 9 un signal dont le niveau est réglé par l'intermédiaire de la borne 10.

Le circuit à seuil 1 réalise la discrimination du symbole. Plus précisément, la sortie du circuit à seuil est dans un état logique donné (haut ou bas) lorsque le signal d'entrée dépasse un seuil de tension donné, et dans l'état logique inverse lorsque le signal d'entrée est au-dessous de ce même seuil de tension.

La bascule de type D5 assure la mémorisation de l'état logique issu du circuit à seuil 1 à l'instant où le signal d'horloge appliqué sur la borne 6 effectue la transition du niveau haut au niveau bas.

L'interface de sortie 8 permet d'attaquer une ligne selon la norme internationale de 75 ohms, de réaliser éventuellement la sommation avec un signal issu d'un autre régénérateur avec une impédance de sortie adaptée à la ligne et un niveau de signal adéquat. Il est souvent nécessaire de pouvoir associer deux ou plusieurs régénérateurs en parallèles de façon à traiter un signal multiniveaux. Par exemple, pour un signal à 3 niveaux dont les états sont représentés symboliquement par −, 0 et +, un premier régénérateur dont la sortie est un 1 logique lorsque l'entrée est + et un 0 logique lorsque l'entrée est − ou 0 est associé à un deuxième régénérateur dont la sortie est 1 logique lorsque l'entrée est 0 ou + et 0 logique lorsque l'entrée est −. Il faut sommer les sorties des deux régénérateurs pour retrouver un signal à 3 niveaux.

Bien que dans le schéma synoptique du comparateur mémorisateur selon l'invention, la bascule type D 5 soit empruntée à l'art connu, le comparateur de tension à seuil 1 et l'interface de sortie 8 constituent des éléments originaux. L'ensemble du comparateur mémorisateur a été étudié et réalisé avec comme objectif une faible dissipation thermique et une faible consommation dans la perspective d'une intégration complète pour les matériels de communication. L'interface de sortie présente l'avantage de réaliser la fonction d'une façon extrêmement simple et souple d'utilisation.

La figure 2 représente le schéma électrique du comparateur de tension à seuil ajustable 1 représenté par le bloc diagramme 1 sur la figure 1.

Ce comparateur comporte trois étages montés en série constitués respectivement par les transistors à effet de champ 11 et 12, pour le premier étage, 13 et 14 pour le second étage, 15 et 16, pour le troisième étage. Ce sont des transistors à effet de champ du type à tension de seuil négative, comprise entre − 1 volt et − 2,5 volts. Par ailleurs, deux tensions alimentent le circuit : une tension positive VDD typiquement comprise entre + 4 et + 7 volts, et une tension négative VSS comprise entre − 3 et − 6 volts.

Le second étage composé de transistors 13 et 14 à effet de champ, est un montage dit à source commune, le transistor 14 étant une charge active du transistor 13. Cet étage possède un gain en tension qui est maximal lorsque la tension grille du transistor 13 est nulle, pourvu que les 2 transistors à effet de champ soient identiques. Ceci est une conséquence de la symétrie de l'étage.

Cet étage possède un coefficient de transfert non linéaire dont le seuil est fixé et vaut zéro. Pour obtenir un seuil ajustable, il suffit de décaler en tension le signal sur la grille du transistor 13, par rapport au signal d'entrée E appliqué sur la borne 2, de la valeur convenable. C'est précisément la fonction du premier étage composé des transistors 11 et 12 qui constituent un montage du type drain commun dont la source de courant 12 est ajustable par l'intermédiaire de la tension continue $V_P$ appliquée sur la borne 3. Si $V_S (t_{11})$ est la tension de source du transistor à effet de champ 11 et si les transistors à effet de champ 11 et 12 sont identiques on a alors l'égalité $V_S (t_{11}) = E + V_{SS} - V_P$ puisque les transistors 11 et 12 débitent le même courant. Par conséquent, $V_S (t_{11})$ est égal au signal E appliqué sur la borne d'entrée 2 décalé d'une tension continue $V_{SS} - V_P$ fixée extérieurement. Un seuil de tension $E_S$ étant donné, $V_P$ doit être réglé à la valeur $E_S + V_{SS}$ pour que le circuit compare le signal d'entrée E à la valeur $E_S$.

Le dernier étage composé du transistor 15 monté en série avec le transistor 16 par l'intermédiaire d'une ou plusieurs diodes 17, effectue un décalage de tension de façon à assurer la compatibilité avec les états logiques de la bascule 5 qui suit le comparateur de tension et également une adaptation d'impédance. Le nombre de diodes de décalage 17 dépend de la tension de seuil des transistors à effets de champs et des tensions d'alimentation. Ce troisième étage est attaqué sur la grille du transistor 15 par le signal de sortie du second étage et il délivre sur la borne 4 un signal électrique appliqué sur la bascule D5. En tenant compte de la nature des transistors à effet de champ, il est possible de faire varier $V_P$ entre les valeurs $V_{SS} + V_T$ et $V_{SS} + V_B$ où $V_T$ est la tension de seuil négative du transistor à effet de champ 12 et $V_B$ le potentiel de diffusion par conséquent, $E_S$ peut varier entre $V_T$ et $V_B$ par rapport à la masse. Pour éviter l'inconvénient selon lequel $V_P$ est inférieur à $V_{SS}$ pour un seuil négatif, le schéma est complété en intercalant une diode 18 entre le transistor 12 et l'alimentation $V_{SS}$ : cette diode doit assurer une meilleure stabilité du seuil. De cette façon, le transistor 12 peut avoir une tension grille-source négative sans que $V_P$ soit inférieur à $V_{SS}$.

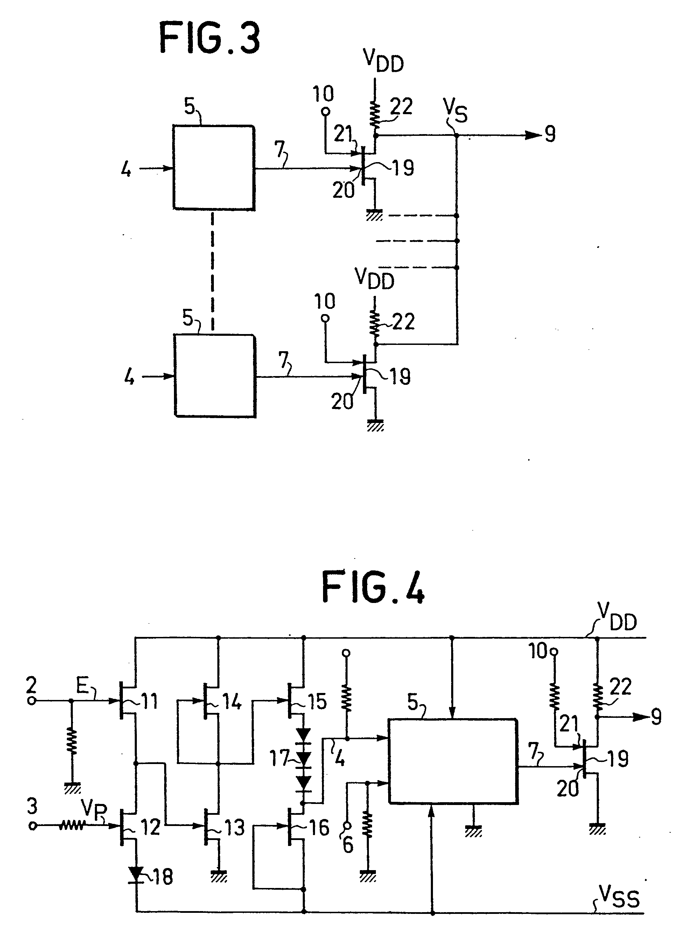

La figure 3 représente le schéma électrique de l'interface de sortie. Cette interface de sortie représentée par le bloc 8 sur la figure 1 est essentiellement constituée par un transistor à effet de champ à double grille 19 monté en source commune avec une charge résistive 22 alimentée par la tension $V_{DD}$. L'intérêt du transistor à effet de champ à double grille tient en ce qu'il permet de contrôler aisément le niveau du signal de sortie sur la borne 9 en appliquant, par la borne 10, une tension continue adéquate sur la deuxième grille 21, la première grille recevant le signal issu de la bascule type D5. Cet étage de sortie a plusieurs fonctions : protéger l'information, en contrôler le niveau, assurer la sommation en tension des signaux issus de plusieurs régénérateurs simplement en raccordant leur point de sortie, et enfin, adapter l'impédance.

Si n voies doivent être sommées en sortie sur une ligne dont l'impédance mesurée sur la borne 9 est égale à $Z_C$, la résistance de charge 22 de chaque transistor à effet de champ, c'est-à-dire de chacune des sorties des n voies, est prise égale à $nZ_C$ de façon à avoir comme impédance de sortie $Z_C$. La sommation résulte de ce qu'un transistor à effet de champ en source commune peut être considéré en première analyse comme une source de courant J qui dépend directement de la tension sur la première grille VG : lorsque la tension de sortie VS est dans l'état 0, J est à sa valeur maximale J max et lorsque $V_G$ est dans l'état bas, J = 0. Comme la tension de sortie $V_s$ vaut : $V_{DD} - Z_C (J_1 + J_2 + ... J_n)$ où $J_1, ..., J_n$ sont des courants de drains de différentes voies numérotées de 1 à n, on a bien sommation des signaux.

La figure 4 représente le schéma électrique du comparateur mémorisateur complet dont la figure 1 représente le schéma synoptique par bloc.

Par comparaison avec la figure 1, le comparateur 1 est constitué par le premier étage comportant les transistors à effet de champ de 11 à 16 associés aux diodes 17 et 18, dont l'entrée de signaux est à la borne 2, l'entrée du signal de référence à la borne 3 et le signal de sortie disponible sur la borne 4. La bascule D5 délivre sur sa borne de sortie 7 un signal appliqué à l'étage interface de sortie constitué par le transistor 19. Le signal de sortie est disponible sur la borne 9. Par rapport aux figures 2 et 3, un certain nombre de résistances sont représentées sur la figure 4. Il s'agit des résistances sur la grille du transistor 11, la grille du transistor 12 et sur les deux bornes d'entrée en 4 et en 6 de la bascule D5. Toutes les résistances du schéma hormis la résistance de charge 22 sont des résistances de protection des transistors à effet de champ.

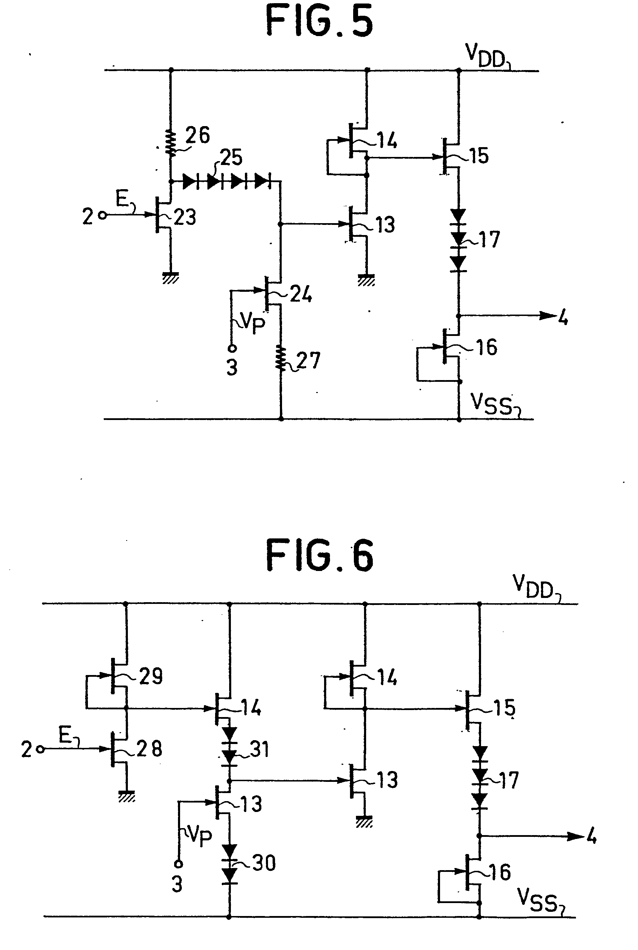

La figure 5 représente le schéma électrique d'un premier perfectionnement apporté au circuit comparateur à seuil, le circuit 1 de la figure 1.

Il ressort de ce schéma que le second étage composé par les transistors 13 et 14 et le troisième étage composé par les transistors 15, 16 et les diodes 17 de ce comparateur à seuil restent identiques à ceux qui ont été exposés à l'occasion de la figure 2. Le premier étage est ainsi modifié : le signal d'entrée disponible sur la borne 2 est appliqué sur la grille d'un transistor à effet de champ 23 monté en source commune entre l'alimentation $V_{DD}$ et la masse par l'intermédiaire d'une résistance 26 branchée sur la source du transistor. Ce transistor 23 amplifie le signal qui est prélevé à travers une série de diodes 25 et appliqué sur la source d'un transistor à effet de champ 24 dont le drain est relié à la tension $V_{SS}$ par l'intermédiaire d'une résistance 27. La tension de polarisation ou de décalage disponible sur la borne 3 est appliquée sur la grille de ce second transistor 24. La tension de sortie de ce premier étage est prélevée sur la source du transistor 24 et appliquée sur la grille du transistor 13 du second étage. Le premier étage composé par les transistors 23 et 24 de ce comparateur ainsi perfectionné est donc un montage à source commune à charge résistive qui assure la fonction de gain dans laquelle est injecté un courant contrôlé par la tension de décalage $V_P$ qui assure la fonction de décalage. Le point de fonctionnement du transistor 23 est ainsi ajusté et ensuite décalé convenablement par les diodes 25 ce qui lui permet d'évoluer autour du seuil interne du deuxième étage c'est-à-dire des transistors 13 et 14.

La figure 6 représente le schéma électrique du comparateur à seuil selon un second perfectionnement. Les étages de sortie composés des transistors 13, 14, 15, 16 et les diodes 17 sont communs avec le schéma de base du comparateur à seuil exposé à l'occasion de la figure 2 et le comparateur à seuil selon un premier perfectionnement exposé ci-dessus.

Cependant, cette troisième réalisation de comparateur à seuil, comporte un étage supplémentaire constitué par les transistors 28 et 29 et des diodes 30 et 31 intercalées dans le premier étage entre les transistors 13 et 14, et la source d'alimentation $V_{SS}$ du transistor 13. L'étage des transistors 28 et 29 est un étage en montage source commune dont la zone à gain élevé se situe autour du point E = 0 parce que les transistors 28 et 29 sont identiques. Le signal E est appliqué sur la grille à la borne 2 du transistor 28. L'étage d'ajustement de seuil constitué par les transistors 13 et 14 comporte plusieurs diodes supplémentaires — 4 étant un nombre préféré — de façon à assurer le décalage de tension et la latitude de réglage de seuil convenable.

Cette troisième réalisation de comparateur à seuil est plus intéressante que la deuxième réalisation. En effet, elle présente moins de dérives en tension parce que tous les transistors sont identiques et que les niveaux de tension sont indépendants des niveaux de courant.

Il est remarquable que le comparateur à seuil nécessite bien des transistors à effet de champ à tension de seuil négative et ne pourrait être transposé en circuit à transistors bipolaires par exemple. De plus, il requiert l'apairage de transistors, ce qui ne peut être pratiquement fait qu'en circuit intégré. L'intérêt de l'intégration est déterminant en dehors d'autres avantages en ce que le seuil de tension n'est fixé en première approximation que par des tensions extérieures et est insensible aux variations des caractéristiques de la couche active du semiconducteur ou des courants circulant dans le circuit. Ceci est important puisque le seuil doit être aussi stable que possible.

Les caractéristiques les plus importantes de la technologie de réalisation du comparateur mémorisateur selon l'invention sont les suivantes : épitaxie en phase vapeur sur couche tampon, grille de transistors à effet de champ en titane, platine, or, double niveau d'interconnexion, intégration des résistances métalliques d'adaptation et de protection.

Les performances du comparateur à mémoire selon l'invention ont été mesurées.

Pour le comparateur à seuil, un gain maximal de l'ordre de 10 dB pour une bande passante de 1,5 Gigahertz a été obtenu avec le comparateur à seuil doté des premiers perfectionnements. La version du comparateur à seuil doté du second perfectionnement présente un gain plus élevé de 25 dB et une bande passante légèrement plus réduite 900 Mégahertz.

La puissance dissipée dans le comparateur à seuil est inférieure à 90 milliwatts pour des tensions d'alimentation VDD = + 5,5 volts et VSS = − 5,5 volts.

Les temps de propagation sont compris entre 130 picosecondes et 300 picosecondes et diffèrent peu suivant que le signal d'entrée est de petite ou de grande amplitude ; cette caractéristique est importante du point de vue du système dans lequel est utilisé le comparateur à mémoire, système dans lequel un retard faible est souhaité et surtout peu dépendant des formes de l'impulsion.

La bascule de type D a été caractérisée en mesurant la fréquence maximale de division par 2 lorsque l'on reboucle la sortie inversée sur l'entrée du circuit. La valeur obtenue a été de 1,6 Gigahertz pour une puissance dissipée de l'ordre de 450 milliwatts ce qui est largement suffisant pour pouvoir régénérer à des débits au moins égaux à 1 Gigabaud.

Les temps de transition du signal de sortie, mesurés de 20 à 80 %, ont été au mieux de 160 picosecondes pour le temps de montée et de 100 picosecondes pour le temps de descente.

Le temps d'acquisition de l'information qu'on peut définir comme la durée minimale du signal à l'entrée qui déclenche à coup sûr la bascule, est inférieur ou égal à 350 picosecondes.

Pour le régénérateur complet, la fréquence d'horloge maximale de fonctionnement se situe au-delà de 1 Gigahertz. Les temps de montée et de descente de l'impulsion de sortie mesurés de 20 % à 80 % sont de l'ordre de 200 picosecondes.

Une figure de mérite importante pour ce type de circuit est la sensibilité définie comme l'amplitude minimale du signal d'entrée non bruité tel que le régénérateur déclenche correctement. La sensibilité croît lorsque la fréquence augmente : elle est inférieure à 10 millivolts, à 50 Mégahertz et atteint 100 millivolts à 650 Mégahertz avec le comparateur à seuil selon le premier perfectionnement et 34 millivolts à 650 Mégahertz avec le
comparateur à seuil doté des seconds perfectionnements. La puissance dissipée varie notablement avec les paramètres technologiques de
réalisation : elle est comprise entre 200 milliwatts
et 550 milliwatts.

Il est important de remarquer que la fréquence
limite de fonctionnement de ce composant qui
est actuellement supérieure à 1 Gigahertz ne doit
pas être considérée comme indicative des limites
de performances de la technologie utilisée pour
sa réalisation, c'est-à-dire de la technologie des
circuits intégrés sur arséniure de gallium à tension de seuil négative. En effet, l'optimisation de
la consommation liée à l'application envisagée
dans les systèmes de télécommunications a
conduit à rechercher un compromis entre la
vitesse et la consommation plutôt qu'à privilégier
la performance dynamique. Hors de cette
contrainte et avec les mêmes règles d'implantation une fréquence maximale de fonctionnement
voisine de 2 Gigahertz peut être atteinte dans
cette technologie.

Le comparateur mémorisateur en circuit intégré à transistor à effet de champ sur arséniure de
gallium selon l'invention a été réalisé pour les
besoins d'un système de transmission numérique
sur câble coaxial, mais son usage peut s'étendre
aux autres systèmes de transmission numérique
tels que faisceau hertzien, fibres optiques etc...
sous la seule condition d'une adaptation des
interfaces de capteur.

Il est utilisable également en instrumentation là
où un traitement rapide du signal est nécessaire
par exemple dans un convertisseur analogique
numérique.

## Revendications

1. Comparateur à mémoire, assurant la régénération de signaux électriques numériques transmis sur ligne coaxiale, comprenant une bascule (5) de type D, à déclenchements sur fronts, à
transistors à effet de champ, destinée à resynchroniser le signal électrique (4) par rapport à un
signal d'horloge (6), ce comparateur étant caractérisé en ce qu'il comporte :
— un étage d'entrée (1), circuit comparateur de
tension à seuil ajustable, à transistors à effet de
champ, qui reçoit sur une première borne
d'entrée (2) le signal électrique (E) et sur une
seconde borne d'entrée (3) un signal de polarisation (V_P) permettant de choisir le seuil des
signaux traités par la bascule D (5), une ou plusieurs diodes (18) situant ce seuil voisin du seuil
des transistors (11 à 16) à effet de champ dudit
étage d'entrée (1),
— un étage de sortie (8), constitué par un transistor à effet de champ (19), à double grille (20,
21), destiné à protéger l'information, contrôler le
niveau et adapter l'impédance du signal de sortie (9) et assurer la sommation en tension des
signaux issus d'une pluralité de régénérateurs.

2. Comparateur à mémoire selon la revendication 1, caractérisé en ce que le circuit comparateur de tension à seuil comporte :
— un premier étage de décalage de tension, qui
comprend deux transistors à effet de champ
identiques (11 et 12), montés en « drain
commun », en série avec des diodes (18) dont le
nombre est compris entre 1 et 4, et dans lequel la
tension de décalage (V_P), appliquée sur une
borne (3) reliée à la grille d'un premier transistor (12) décale la tension (E) appliquée sur la
grille d'un second transistor (11) ;
— un second étage à grand gain en tension, qui
comprend deux transistors à effet de champ
identiques (13 et 14), montés en source
commune, qui reçoit sur la grille d'un transistor (13) le signal de sortie du premier étage,
prélevé entre les deux premiers transistors (11 et
12) ;
— un troisième étage, du type suiveur, qui
comprend deux transistors à effet de champ
identiques (15 et 16) entre lesquels sont placées
des diodes de décalage (17) dont le nombre est
compris entre 1 et 4, cet étage recevant sur la
grille d'un transistor (15) le signal à haute impédance prélevé entre les deux transistors (13 et 14)
du second étage, et délivrant sur sa borne de
sortie (4) un signal adapté en impédance et
compatible avec les niveaux logiques de la bascule D (5).

3. Comparateur à mémoire selon la revendication 1, caractérisé en ce que l'étage de sortie (8)
est constitué par un transistor à effet de
champ (19), à double grille, lequel reçoit sur sa
première grille (20) le signal issu de la borne de
sortie (7) de la bascule (5), sur sa seconde
grille (21) une tension de commande (10) et est
chargé par une résistance (22) dont la valeur est
égale à « n » fois l'impédance de la ligne de
sortie (9), ce qui permet d'effectuer la sommation
de « n » comparateurs à mémoire, branchés en
parallèle, et délivre sur sa borne de sortie (9) un
courant adapté en amplitude et, sous basse impédance.

4. Comparateur à mémoire selon la revendication 1, caractérisé en ce que le premier étage du
comparateur de tension à seuil (1) comporte un
premier transistor à effet de champ (23) monté en
source commune, à charge résistive (26), qui
reçoit sur sa grille la tension d'entrée E (borne 2),
et un second transistor à effet de champ (24), à
charge résistive (27), qui reçoit sur sa grille la
tension de polarisation V_P (borne 3), la tension de
sortie de ce premier étage étant décalée par des
diodes (25) dont le nombre est compris entre 1 et
4.

5. Comparateur à mémoire selon les revendications 1 et 2, caractérisé en ce que le premier étage
du comparateur à seuil (1) est précédé d'un étage
d'amplification des petits signaux, comportant
deux transistors à effet de champ (28 et 29)
identiques, montés en source commune, qui
reçoit sur la grille d'un transistor (28) la tension
d'entrée E (borne 2) et délivre un signal amplifié
prélevé entre les deux transistors.

# Claims

1. Storage comparator assuring the regeneration of digital electric signals transmitted through a coaxial line, comprising an edge-triggered, field effect transistor D-flip-flop (5) for resynchronization of the electric signal (4) with respect to a clock signal (6), said comparator being characterized in that it comprises :
— a field effect input stage (1) forming an adjustable threshold voltage comparator circuit, receiving the input signal (E) on a first input terminal (2) and, on a second input terminal (3), a polarization signal ($V_p$) allowing to select the threshold of the signals processed by the D-flip-flop (5), one or a plurality of diodes (18) locating said threshold in the neighborhood of the threshold of the field effect transistors (11 to 16) of the input stage (1),
— an output stage (8) formed of a dual gate (20, 21) field effect transistor (19) for protecting the information, controlling the level and adapting the impedance of the output signal (9) and for assuring the voltage summing of the signals delivered by a plurality of regenerators.

2. Storage comparator in accordance with claim 1, characterized in that the threshold voltage comparator circuit comprises :
— a first voltage shifting stage comprising two identical field effect transistors (11 and 12) mounted in « common drain » in series with the diodes (18) the number of which is comprised between 1 and 4, and in which the shifting voltage ($V_p$) applied on one terminal (3) connected to the gate of a first transistor (12) shifts the voltage (E) applied to the gate of a second transistor (11) ;
— a second high voltage gain stage comprising two identical field effect transistors (13 and 14) mounted in common source, receiving the output signal of the first stage at the gate of a transistor (13), said output signal being derived between the two first transistors (11 and 12) ;
— a third stage of follower type comprising two identical field effect transistors (15 and 16), the shifting diode (17) being placed there-between the number of which is comprised between 1 and 4, said stage receiving on the gate of a transistor (15) the high impedance signal derived between the two transistors (13 and 14) of the second stage, and delivering on its output terminal (4) an impedance adapted signal compatible with the logic levels of the D-flip-flop (5).

3. Storage comparator in accordance with claim 1, characterized in that the output stage (8) is formed of a dual gate field effect transistor (19) receiving on its first gate (20) the signal from the output terminal (7) of the flip-flop (5), on its second gate (21) a control voltage (10) and which is loaded by a resistance (22) the value of which is equal to the « n »-fold impedance of the output line (9) allowing to perform the summing of « n » storage comparators mounted in parallel, and delivering on the output terminal (9) an amplitude adapted, low impedance current.

4. Storage comparator in accordance with claim 1, characterized in that the first stage of the threshold voltage comparator (1) comprises a first field effect transistor (23) mounted in common source and having a resistive load (26), receiving on its gate the input voltage E (terminal 2), and a second field effect transistor (24) having a resistive load (27) and receiving on its gate the polarization voltage $V_p$ (terminal 3), the output of the first stage being shifted by diodes (25) the number of which is comprised between 1 and 4.

5. Storage comparator in accordance with claims 1 and 2, characterized in that the first stage of the threshold comparator (1) is preceded by a small signal amplification stage comprising two identical field effect transistors (28 and 29) mounted in common source, and receiving the input voltage E (terminal 2) on the gate of one transistor (28) and delivering an amplified signal derived between the two transistors.

# Ansprüche

1. Speichervergleicher zum Regenerieren von elektrischen Digitalsignalen, die auf einer Koaxialleitung übertragen werden, mit einer flankengesteuerten Feldeffekt-transistor-Kippschaltung (5) vom D-Typ, die dazu bestimmt ist, die Synchronisierung des elektrischen Signals (4) mit einem Taktsignal (6) wiederherzustellen, wobei dieser Vergleicher dadurch gekennzeichnet ist, daß er umfaßt :
— eine Feldeffekttransistor-Eingangsstufe (1), die eine Spannungsvergleicherschaltung mit einstellbarem Schwellwert bildet und an einem ersten Eingangsanschluß (2) das elektrische Signal (E) und an einem zweiten Eingangsanschluß (3) ein Polarisationssignal ($V_p$) empfängt, welches es gestattet, den Schwellwert der durch die D-Kippschaltung (5) verarbeiteten Signale zu wählen, wobei eine oder mehrere Dioden (18) diesen Schwellwert in die Nähe des Schwellwerts des Feldeffekttransistors (11 bis 16) der genannten Eingangsstufe (1) legen,
— eine aus einem Feldeffekttransistor (19) mit Zweifachgate (20, 21) gebildete Ausgangsstufe (8), die dazu bestimmt ist, die Information zu schützen, den Pegel zu steuern und die Impedanz des Ausgangssignals (9) anzupassen sowie die Spannungssummierung der von einer Mehrzahl von Regeneratoren abgegebenen Signale zu gewährleisten.

2. Speichervergleicher nach Anspruch 1, dadurch gekennzeichnet, daß die Schwellwert-Spannungsvergleicherschaltung umfaßt :
— eine erste Spannungsschieberstufe, die zwei gleiche Feldeffekttransistoren (11 und 12) umfaßt, die in « Drain-Schaltung » geschaltet sind, in Reihe mit den Dioden (18), deren Anzahl zwischen 1 und 4 beträgt, und in welcher die Verschiebespannung ($V_p$), die an einen Anschluß (3) angelegt ist, welcher mit dem Gate eines ersten Transistors (12) verbunden ist, die an das Gate eines zweiten Transistors (11) angelegte Spannung (E) verschiebt ;

— eine zweite Stufe mit hoher Spannungsverstärkung, die zwei gleiche Feldeffekttransistoren (13 und 14) enthält, die in Source-Schaltung geschaltet sind, und welche am Gate eines Transistors (13) das Ausgangssignal der ersten Stufe empfängt, das zwischen den beiden ersten Transistoren (11 und 12) abgegriffen ist ;

— eine dritte Stufe vom Spannungsfolgertyp, die zwei gleiche Feldeffekttransistoren (15 und 16) enthält, zwischen denen die Verschiebedioden (17) angeordnet sind, deren Anzahl zwischen 1 und 4 beträgt, wobei diese Stufe am Gate eines Transistors (15) das zwischen den beiden Transistoren (13 und 14) der zweiten Stufe mit hoher Impedanz abgegriffene Signal empfängt und an seinem Ausgangsanschluß (4) ein impedanzangepaßtes Signal abgibt, das kompatibel mit den Logikpegeln der D-Kippschaltung (5) ist.

3. Speichervergleicher nach Anspruch 1, dadurch gekennzeichnet, daß die Ausgangsstufe (8) aus einem Feldeffekttransistor (19) mit Zweifachgate gebildet ist, der an seinem ersten Gate (20) das vom Ausgangsanschluß (7) der Kippschaltung (5) abgegebene Signal und an seinem zweiten Gate (21) eine Steuerspannung (10) empfängt, und welcher durch einen Widerstand (22) belastet ist, dessen Wert das « n »-fache der Impedanz der Ausgangsleitung (9) beträgt, wodurch die Summierung von « n » Speichervergleichern erfolgen kann, die parallelgeschaltet sind, und an ihrem Ausgangsanschluß (9) einen amplitudenangepaßten Strom mit niedriger Impedanz abgibt.

4. Speichervergleicher nach Anspruch 1, dadurch gekennzeichnet, daß die erste Stufe des Schwellwert-Spannungsvergleichers (1) einen ersten Feldeffekt-transistor (23) in Source-Schaltung und mit resistiver Belastung (26) umfaßt, der an seinem Gate die Eingangsspannung E (Anschluß 2) empfängt, und einen zweiten Feldeffekttransistor (24) mit resistiver Belastung (27) enthält, der an seinem Gate die Polarisationsspannung $V_p$ (Anschluß 3) empfängt, wobei die Ausgangsspannung dieser ersten Stufe durch Dioden (25) verschoben ist, deren Anzahl zwischen 1 und 4 beträgt.

5. Speichervergleicher nach Ansprüchen 1 und 2, dadurch gekennzeichnet, daß der ersten Stufe des Spannungsvergleichers (1) eine Kleinsignal-Verstärkerstufe vorausgeht, die zwei gleiche Feldeffekttransistoren (28 und 29) umfaßt, die in Source-Schaltung geschaltet sind, und welche an dem Gate des einen Transistors (28) die Eingangsspannung E (Anschluß 2) empfängt und ein zwischen den beiden Transistoren abgegriffenes verstärktes Signal abgibt.

# FIG.1

2○→ ▷ 1

4 → 5 → 7 → 8 → 9

3

6

10

# FIG.2

V_DD

2○ E → 11

V_P

3○ → 12

14

13

18

15

17

4

16

V_SS

# FIG.3

# FIG.4

2

# FIG.5

# FIG.6

3